# EUROPEAN PATENT APPLICATION

(11) **EP 4 636 146 A1**
(43) Date of publication of application: **22.10.2025**
(21) Application number: 25164348.2
(22) Date of filing: 18.03.2025
(51) Int. Cl.: D03D 49/02, D03J 1/00

(54) **LOOM WITH ABNORMALITY DETECTION DEVICE**

(30) Priority: 18.04.2024 JP 2024067650
(71) Applicant: KABUSHIKI KAISHA TOYOTA JIDOSHOKKI, Kariya-shi, Aichi 448-8671 (JP)
(72) Inventor: MATSUOKA, Daisuke, Kariya-shi, 448-8671 (JP)
(74) Representative: TBK

(57) **Abstract**

A loom abnormality detection device (20) includes a camera (21); a detection unit (23) configured to detect an abnormality in a loom (10) or in weaving, based on an image captured by the camera (21); a bracket (24) having a camera fixing portion (41) to which the camera (21) is fixed, and a bolt (25) inserted through a bolt insertion hole (40a) of the bracket (24) and screwed into a screw hole (19) for an eye bolt (B) provided in a side frame (11a, 11b) of the loom (10). The bracket (24) includes a restriction portion (43), the restriction portion (43) being in contact with a fixed member to restrict rotation of the bracket (24), the fixed member being a part of the loom (10) that does not change its position.

## Description

The present invention relates to a loom abnormality detection device.

### BACKGROUND ART

There is known a loom abnormality detection device that includes a camera and a detection unit that detects an abnormality in a loom or in weaving based on an image captured by the camera. For example, Japanese Patent Application Publication No. 2020-196972 discloses a loom shedding failure detection device that detects a warp shedding failure. In the loom shedding failure detection device, a camera is attached to one of a pair of side frames of a loom, which is disposed on one side in a width direction of the loom. The camera captures an image from the one side to the other side of the loom in the width direction.

In general, each of the pair of side frames has a screw hole for an eye bolt used for transporting the loom. In a case where the camera is attached to one of the side frames, for example, the camera may be fixed to the screw hole for the eye bolt with a bolt.

However, when the camera captures images continuously during the operation of the loom, an image capturing range of the camera may shift due to vibration of the loom. In this case, processing of captured images and comparison of the captured images during the operation of the loom may become difficult. Furthermore, when a loom abnormality detection device is used on a plurality of looms, if the image capturing range of the camera differs for each loom, the comparison of the captured images among the plurality of looms becomes difficult.

### SUMMARY

In accordance with an aspect of the present disclosure, there is provided a loom abnormality detection device including a camera, a detection unit configured to detect an abnormality in a loom or in weaving, based on an image captured by the camera, a bracket having a camera fixing portion to which the camera is fixed, and a bolt inserted through a bolt insertion hole of the bracket and screwed into a screw hole for an eye bolt provided in a side frame of the loom. The bracket includes a restriction portion, the restriction portion being in contact with a fixed member to restrict rotation of the bracket, the fixed member being a part of the loom that does not change its position.

Other aspects and advantages of the disclosure will become apparent from the following description, taken in conjunction with the accompanying drawings, illustrating by way of example the principles of the disclosure.

### BRIEF DESCRIPTION OF THE DRAWINGS

The disclosure, together with objects and advantages thereof, may best be understood by reference to the following description of the embodiments together with the accompanying drawings in which:
FIG. 1 is a plan view of a loom;
FIG. 2 is a perspective view illustrating a protrusion;
FIG. 3 is a perspective view illustrating a loom abnormality detection device according to an embodiment;
FIG. 4 is a side view illustrating the loom abnormality detection device according to the embodiment;
FIG. 5 is a plan view illustrating the loom abnormality detection device according to the embodiment;
FIG. 6 is a plan view illustrating a loom abnormality detection device according to a modification;
FIG. 7 is a plan view illustrating a loom abnormality detection device according to a modification;
FIG. 8 is a plan view illustrating a loom abnormality detection device according to a modification; and
FIG. 9 is a perspective view illustrating a loom abnormality detection device according to a modification.

### DETAILED DESCRIPTION OF THE EMBODIMENTS

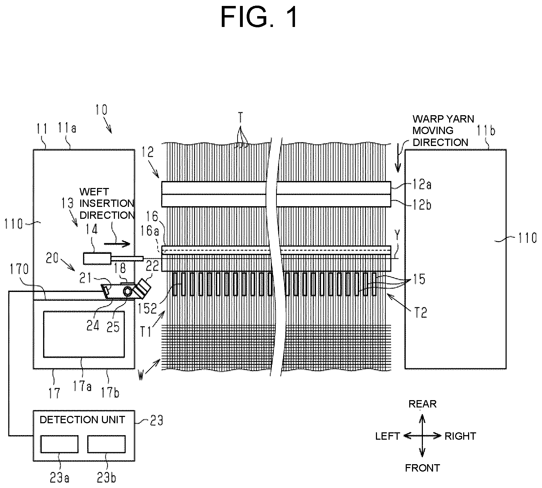

The following will describe an embodiment of a loom abnormality detection device with reference to FIGS. 1 to 5. The loom abnormality detection device of the present embodiment is used in an air jet loom. The loom abnormality detection device of the present embodiment detects an abnormality in warp shedding as an abnormality in weaving.

### Loom

As illustrated in FIG. 1, a loom 10 includes a frame 11. The frame 11 includes a pair of side frames 11a, 11b. The side frames 11a, 11b are positioned on opposite ends of the loom 10 in a lateral direction thereof. Of the pair of side frames 11a, 11b, a first side frame 11a is positioned on the left end of the frame 11, and a second side frame 11b is positioned on the right end of the frame 11. Each of the pair of side frames 11a, 11b is a fixed member that is a part whose position does not change in the loom 10.

A plurality of warp yarns T is arranged in the lateral direction of the loom 10. The warp yarns T extend in the front-rear direction of the loom 10. The warp yarns T are drawn from a supply roll (not illustrated) provided in the rear of the frame 11. The warp yarns T are woven into a woven fabric W, and then wound up by a winding roll (not illustrated) provided in front of the frame 11. The warp yarns T move from the rear to the front in the front-rear direction of the loom 10.

The loom 10 includes a warp shedding device 12 for shedding the warp yarns T. The warp shedding device 12 includes two heald frames 12a, 12b. The heald frames 12a, 12b are arranged in the front-rear direction of the loom 10. Each of the heald frames 12a, 12b is provided with a plurality of healds (not illustrated). The healds are arranged in the lateral direction of the loom 10. Of the warp yarns T arranged in the lateral direction of the loom 10, some of the warp yarns T are inserted through the healds of one heald frame 12a, while the other of the warp yarns T are inserted through the healds of the other heald frame 12b. The heald frames 12a, 12b move reciprocally in the vertical direction of the loom 10. When the one heald frame 12a moves upward, the other heald frame 12b moves downward. When the one heald frame 12a moves downward, the other heald frame 12b moves upward. Thus, a shed of the warp yarns T is created by the warp yarns T inserted through the healds of the one heald frame 12a and the warp yarns T inserted through the healds of the other heald frame 12b. The shed of the warp yarns T has an entrance T1 and an exit T2. The entrance T1 is on the left end of the shed in the lateral direction of the loom 10. The exit T2 is on the right end of the shed in the lateral direction of the loom 10.

The loom 10 includes a weft insertion device 13. The weft insertion device 13 includes a main nozzle 14 and a plurality of sub-nozzles 15.

The main nozzle 14 is attached to the first side frame 11a. Air is discharged from the main nozzle 14 to insert a weft yarn Y into the shed of the warp yarns T in the lateral direction of the loom 10. The weft yarn Y enters the shed through the entrance T1. The weft yarn Y travels through the shed in the lateral direction of the loom 10, and then exits the shed from the exit T2. A direction in which the weft yarn Y is inserted by the main nozzle 14 is called a weft insertion direction. The weft insertion direction is a direction from the left to the right in the lateral direction of the loom 10.

The sub-nozzles 15 are disposed in front of the warp shedding device 12 in the front-rear direction of the loom 10. The sub-nozzles 15 are disposed downstream of the main nozzle 14 in the weft insertion direction. The sub-nozzles 15 are arranged in the lateral direction of the loom 10. Air is discharged from the sub-nozzles 15 toward the weft yarn Y inserted into the shed of the warp yarns T.

The loom 10 includes a reed 16 that beats the weft yarn Y inserted into the shed of the warp yarns T. The reed 16 is disposed between the warp shedding device 12 and the sub-nozzles 15 in the front-rear direction of the loom 10. The reed 16 is disposed downstream of the main nozzle 14 in the weft insertion direction. The reed 16 has a weft travel passage 16a. When the weft yarn Y is inserted, the weft travel passage 16a is positioned within the shed of the warp yarns T. The weft yarn Y inserted into the shed of the warp yarns T travels through the weft travel passage 16a.

The loom 10 weaves cloth by repeatedly causing the warp shedding device 12 to perform shedding of the warp yarns T, the weft insertion device 13 to perform weft insertion of the weft yarn Y, and the reed 16 to perform beating repeatedly while moving the warp yarns T from the rear to the front in the front-rear direction of the loom 10.

The loom 10 includes an operation unit 17. The operation unit 17 is provided in the first side frame 11a. The operation unit 17 is disposed in front of the main nozzle 14 in the front-rear direction of the loom 10. The operation unit 17 has a display unit 17a that displays an operation screen of the loom 10, and a housing 17b that accommodates the display unit 17a. The operation unit 17 is a fixed member of the loom 10.

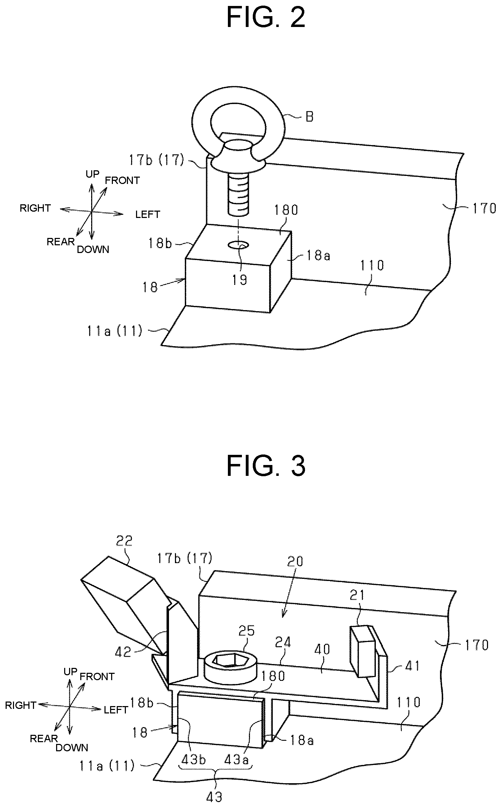

As illustrated in FIGS. 1 and 2, the first side frame 11a has a protrusion 18 protruding from an upper surface 110 of the first side frame 11a. The protrusion 18 is formed integrally with the first side frame 11a. The protrusion 18 is disposed between the main nozzle 14 and the operation unit 17 in the front-rear direction of the loom 10. As described above, the pair of side frames 11a, 11b is a fixed member of the loom 10. Therefore, the protrusion 18 formed integrally with the first side frame 11a is also a fixed member of the loom 10.

As illustrated in FIG. 2, the protrusion 18 has a screw hole 19. The screw hole 19 is opened at a distal end surface 180 of the protrusion 18. An eye bolt B, which is used to hang the loom 10 with a crane when the loom 10 is transported, is screwed into the screw hole 19. That is, the first side frame 11a has the screw hole 19 for the eye bolt B that is used when the loom 10 is transported. When the loom 10 is not being transported, the eye bolt B is removed from the screw hole 19.

The protrusion 18 of the present embodiment has a quadrangular prism shape. The protrusion 18 has a rectangular shape in a plan view. The protrusion 18 has a pair of side surfaces 18a, 18b. The side surfaces 18a, 18b form a pair in the lateral direction of the loom 10.

### Loom abnormality detection device

As illustrated in FIGS. 1 and 3, a loom abnormality detection device 20 includes a camera 21, a light source 22, a detection unit 23, a bracket 24, and a bolt 25.

The camera 21 is a digital camera. The camera 21 has an imaging element. Examples of the imaging element include a charge coupled device (CCD) image sensor and a complementary metal oxide semiconductor (CMOS) image sensor. The camera 21 captures an image of an object for which the loom abnormality detection device 20 detects whether or not an abnormality has occurred. The object of the present embodiment is the shed of the warp yarns T. Therefore, the camera 21 captures an image of the shed of the warp yarns T. In addition to the shed of the warp yarns T, the camera 21 of the present embodiment also captures an image of the main nozzle 14, a sub-nozzle 152, which is the second sub-nozzle from the upstream side in the weft insertion direction among the sub-nozzles 15, and the reed 16.

The light source 22 is, for example, an LED light. The light source 22 illuminates an image capturing range of the camera 21. The light source 22 of the present embodiment illuminates the shed of the warp yarns T.

As illustrated in FIG. 1, the detection unit 23 includes a processor 23a and a memory 23b. Examples of the processor 23a include a central processing unit (CPU), a graphics processing unit (GPU), and a digital signal processor (DSP). The memory 23b includes a random access memory (RAM) and a read only memory (ROM). The memory 23b stores program codes or instructions configured to cause the processor 23a to carry out operations. The memory 23b, i.e., a computer-readable medium, includes any available medium that can be accessed by a general-purpose or a special-purpose computer. The detection unit 23 may be configured with a hardware circuit such as an application specific integrated circuit (ASIC) or a field programmable gate array (FPGA). The detection unit 23, which is a processing circuit, may include one or more processors that operate according to a computer program, one or more hardware circuits such as an ASIC and an FPGA, or a combination thereof.

The detection unit 23 is connected to the camera 21. The detection unit 23 acquires the image captured by the camera 21. The detection unit 23 detects, based on the image captured by the camera 21, whether or not an abnormality has occurred in the loom 10 or in weaving. The detection unit 23 of the present embodiment detects whether or not an abnormality has occurred in the shed of the warp yarns T based on the image captured by the camera 21.

### Bracket

As illustrated in FIG. 3, the bracket 24 has a base portion 40, a camera fixing portion 41 to which the camera 21 is fixed, and a light source fixing portion 42 to which the light source 22 is fixed.

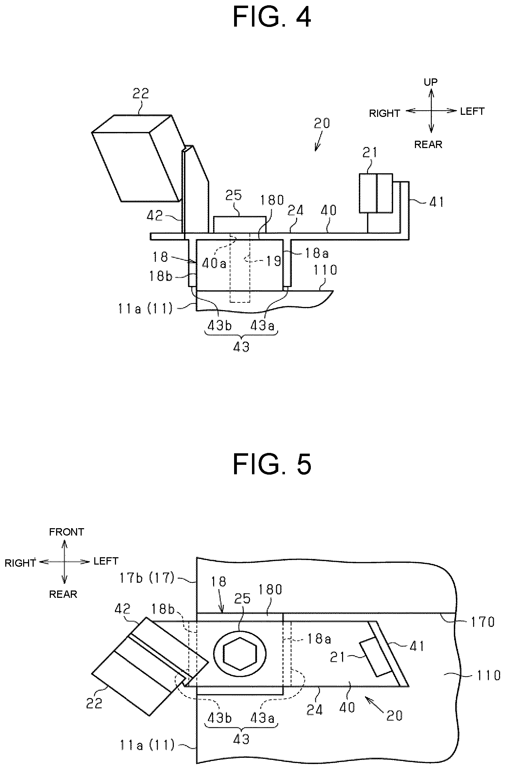

As illustrated in FIG. 4, the base portion 40 has a flat plate shape. The base portion 40 has a bolt insertion hole 40a. The bolt insertion hole 40a extends through the base portion 40 in a thickness direction thereof. The camera fixing portion 41 extends in the thickness direction of the base portion 40 from a first end portion of the base portion 40 in a longitudinal direction thereof. The light source fixing portion 42 extends in the thickness direction of the base portion 40 from a second end portion of the base portion 40 in the longitudinal direction thereof. A direction in which the camera fixing portion 41 extends from the base portion 40 and a direction in which the light source fixing portion 42 extends from the base portion 40 are the same.

The bracket 24 is fixed to the protrusion 18 by screwing the bolt 25 inserted through the bolt insertion hole 40a of the base portion 40 into the screw hole 19 of the protrusion 18. As a result, the camera 21 and the light source 22 are fixed to the first side frame 11a via the bracket 24. As described above, the protrusion 18 is disposed between the main nozzle 14 and the operation unit 17 in the front-rear direction of the loom 10. Therefore, the bracket 24, the camera 21, and the light source 22 are disposed between the main nozzle 14 and the operation unit 17 in the front-rear direction of the loom 10. The camera fixing portion 41 and the light source fixing portion 42 each extend upward from the base portion 40.

As illustrated in FIG. 5, the longitudinal direction of the base portion 40 coincides with the lateral direction of the loom 10. The camera fixing portion 41 and the camera 21 are disposed on the left side of the bolt 25 in the lateral direction of the loom 10. The light source fixing portion 42 and the light source 22 are disposed on the right side of the bolt 25 in the lateral direction of the loom 10.

In the present embodiment, the camera 21 captures an image from the left side to the right side in the lateral direction of the loom 10. In other words, the camera 21 captures an image from an upstream side to a downstream side in the weft insertion direction of the weft yarn Y. Furthermore, a direction in which the camera 21 captures an image is inclined relative to the lateral direction of the loom 10. The camera 21 captures an image from the front side to the rear side in the front-rear direction of the loom 10.

The light source 22 emits light from the left side to the right side in the lateral direction of the loom 10. In other words, the light source 22 emits light from the upstream side to the downstream side in the weft insertion direction of the weft yarn Y. In addition, a direction of light emitted by the light source 22 is inclined relative to the lateral direction of the loom 10. The light source 22 emits light from the front side to the rear side in the front-rear direction of the loom 10. Furthermore, the direction of light emitted by the light source 22 is inclined relative to a horizontal direction. The light source 22 emits light from an upper side to a lower side in the vertical direction of the loom 10.

### Restriction portion

As illustrated in FIGS. 4 and 5, the bracket 24 has a restriction portion 43. The restriction portion 43 of the present embodiment is formed of a pair of restriction plates 43a, 43b. The restriction plates 43a, 43b each have a flat plate shape. The restriction plates 43a, 43b each protrude from a lower surface of the base portion 40. Of the pair of restriction plates 43a, 43b, a first restriction plate 43a is positioned closer to the first end than the bolt insertion hole 40a in the longitudinal direction of the base portion 40, and a second restriction plate 43b is positioned closer to the second end than the bolt insertion hole 40a in the longitudinal direction of the base portion 40.

The restriction plates 43a, 43b are disposed so as to sandwich the protrusion 18 in the lateral direction of the loom 10. The first restriction plate 43a of the restriction plates 43a, 43b has an inner surface in contact with the first side surface 18a of the pair of side surfaces 18a, 18b of the protrusion 18. The second restriction plate 43b of the restriction plates 43a, 43b has an inner surface in contact with a second side surface 18b of the pair of side surfaces 18a, 18b of the protrusion 18. Thus, the restriction portion 43 is in contact with the protrusion 18 which is the fixed member of the loom 10. The restriction portion 43 in contact with the protrusion 18 restricts rotation of the bracket 24.

### Operation of present embodiment

The following will describe operation of the present embodiment.

Even if the bracket 24 is rotated relative to the first side frame 11a about the bolt 25, the pair of restriction plates 43a, 43b in contact with the pair of side surfaces 18a, 18b of the protrusion 18, respectively, restricts the rotation of the bracket 24. As a result, the rotation of the camera 21 fixed to the camera fixing portion 41 of the bracket 24 is restricted, so that the image capturing range of the camera 21 can be kept constant.

### Effects of present embodiment

The following will describe effects of the present embodiment.
(1) The loom abnormality detection device 20 includes the camera 21, the detection unit 23, the bracket 24, and the bolt 25. The detection unit 23 detects an abnormality in the loom 10 or in weaving, based on an image captured by the camera 21. The bracket 24 has the camera fixing portion 41 to which the camera 21 is fixed. The bolt 25 is inserted through the bolt insertion hole 40a of the bracket 24, and is screwed into the screw hole 19 for the eye bolt B provided in the first side frame 11a. The bracket 24 has the restriction portion 43 that restricts the rotation of the bracket 24 with the restriction portion 43 in contact with the protrusion 18 corresponding to the fixed member of the loom 10.
   According to this configuration, even if the bracket 24 is rotated relative to the first side frame 11a about the bolt 25, the restriction portion 43 in contact with the protrusion 18 restricts the rotation of the bracket 24. Thus, the rotation of the camera 21 fixed to the camera fixing portion 41 of the bracket 24 is also restricted. Therefore, the image capturing range of the camera 21 can be kept constant. As a result, even when the camera 21 continuously captures images during the operation of the loom 10, the image capturing range of the camera 21 is unlikely to shift, which allows image processing of the captured images and comparison of the captured images during the operation of the loom 10 to be performed easily. In addition, when the loom abnormality detection device 20 is used on a plurality of looms 10, the image capturing range of the camera 21 is less likely to vary among the looms 10, which allows the comparison of the captured images among the plurality of looms 10 to be performed easily.
(2) The loom abnormality detection device 20 includes the light source 22 that illuminates the image capturing range of the camera 21. The bracket 24 has the light source fixing portion 42 to which the light source 22 is fixed. According to this configuration, since the rotation of the bracket 24 is restricted by the restriction portion 43, rotation of the light source 22 fixed to the light source fixing portion 42 of the bracket 24 is also restricted. Therefore, a range illuminated by the light source 22 can be kept constant. In addition, the positional relationship between the camera 21 and the light source 22 can be kept constant.
(3) The first side frame 11a has the protrusion 18 that protrudes from the upper surface 110 and corresponds to the fixed member. The protrusion 18 has a rectangular shape in a plan view. The screw hole 19 is opened at the distal end surface 180 of the protrusion 18. The restriction portion 43 in contact with the pair of side surfaces 18a, 18b of the protrusion 18 restricts the rotation of the bracket 24. The protrusion 18 is an existing component of the loom 10, which has been already provided in the first side frame 11a as a portion into which a distal end portion of the eye bolt B is inserted. Thus, there is no need to provide a new fixed member to the loom 10. Therefore, the loom abnormality detection device 20 can be used in existing looms 10.
(4) The restriction portion 43 is formed of the pair of restriction plates 43a, 43b. The restriction plates 43a, 43b are provided so as to sandwich the protrusion 18. According to this configuration, for example, as compared to a case where the restriction portion 43 is formed of a single restriction plate, the image capturing range of the camera 21 may be easily kept constant even if the bracket 24 is subjected to severe vibrations during the operation of the loom 10.
(5) The screw hole 19 into which the bolt 25 of the loom abnormality detection device 20 is screwed is an existing screw hole for the eye bolt B that is used when the loom 10 is transported. Therefore, there is no need to provide a new screw hole in the loom 10 for fixing the bracket 24 to the first side frame 11a. Therefore, the loom abnormality detection device 20 can be used in the existing looms 10.
(6) The camera 21 is fixed to the first side frame 11a with the bolt 25. Therefore, for example, as compared to a case where the camera 21 is attached to the first side frame 11a with a magnet arm or the like, the image capturing range of the camera 21 may be kept constant easily.

### Modification

The above embodiment may be modified as exemplified below. The above embodiment and the following modifications may be combined with each other as long as they do not technically contradict each other.

Although the restriction portion 43 is formed of the pair of restriction plates 43a, 43b in the above embodiment, the restriction portion 43 may be formed of either one of the pair of restriction plates 43a, 43b, or three or more restriction plates.

In the above embodiment, the restriction portion 43 is formed of the pair of restriction plates 43a, 43b protruding from the lower surface of the base portion 40, but the configuration is not limited to this. In addition, the restriction portion 43 restricts the rotation of the bracket 24 with the restriction portion 43 in contact with the protrusion 18 as the fixed member, but the configuration is not limited to this.

For example, a side surface of the base portion 40 of the bracket 24 may be placed in contact with the rear surface 170 of the housing 17b of the operation unit 17 as the fixed member of the loom 10 to restrict the rotation of the bracket 24. In this case, the side surface of the base portion 40 serves as the restriction portion 43.

The operation unit 17 is an existing component of the loom 10, which has been already provided in the first side frame 11a of the loom 10 as a member for operating the loom 10. Thus, the rotation of the bracket 24 can be restricted without providing a new fixed member in the loom 10. Therefore, the loom abnormality detection device 20 can be used in the existing looms 10.

In the above embodiment, the protrusion 18 has a rectangular shape in a plan view, but the shape of the protrusion 18 is not limited to this.

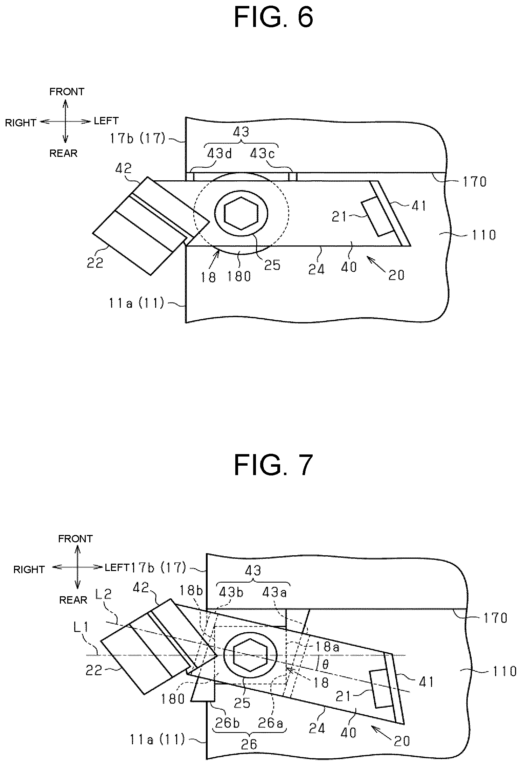

For example, as illustrated in FIG. 6, the protrusion 18 may have a cylindrical shape, that is, a circular shape in a plan view. However, in this case, if the restriction portion 43 is formed of the pair of restriction plates 43a, 43b as in the above embodiment, restricting the rotation of the bracket 24 becomes difficult, so that the restriction portion 43 is configured as follows.

As an example, the restriction portion 43 is formed of a pair of restriction protrusions 43c, 43d protruding from the side surface of the base portion 40 toward the operation unit 17. The restriction protrusions 43c, 43d each are in contact with the rear surface 170 of the housing 17b of the operation unit 17 corresponding to the fixed member of the loom 10.

In this case, even if the bracket 24 is rotated in a first direction relative to the first side frame 11a about the bolt 25, a first restriction protrusion 43c is placed in contact with the rear surface 170 of the housing 17b, which restricts the rotation of the bracket 24. In addition, even if the bracket 24 is rotated in a second direction, which is a direction opposite to the first direction, relative to the first side frame 11a about the bolt 25, a second restriction protrusion 43d is placed in contact with the rear surface 170 of the housing 17b, which restricts the rotation of the bracket 24.

As another example, in a case where the restriction portion 43 is formed of the pair of restriction plates 43a, 43b extending from the lower surface of the base portion 40, the inner surfaces of the restriction plates 43a, 43b are formed into a curved surface extending along an outer peripheral surface of the protrusion 18.

The protrusion 18 does not have to be provided in the first side frame 11a. The screw hole 19 for the eye bolt B may be provided in the first side frame 11a so as to be opened at the upper surface 110 of the first side frame 11a.

As illustrated in FIG. 7, the loom abnormality detection device 20 may include an adjustment member 26 for adjusting an angle θ of the bracket 24 relative to the lateral direction of the loom 10. An imaginary line passing through the center of the bolt 25 and extending in the lateral direction of the loom 10 is defined as a first imaginary line L1. An imaginary line passing through the center of the bolt 25 and extending in the longitudinal direction of the base portion 40 of the bracket 24 is defined as a second imaginary line L2. The angle θ of the bracket 24 relative to the lateral direction of the loom 10 is an inclination angle of the second imaginary line L2 relative to the first imaginary line L1. In the example illustrated in FIG. 7, a direction in which the pair of side surfaces 18a, 18b of the protrusion 18 forms a pair, i.e., a direction in which the side surfaces 18a, 18b are arranged or a direction in which the side surfaces 18a, 18b face each other , coincides with the lateral direction of the loom 10. Thus, the angle θ of the bracket 24 relative to the lateral direction of the loom 10 is adjusted by adjusting the inclination angle of the longitudinal direction of the base portion 40 of the bracket 24 relative to the direction in which the pair of side surfaces 18a, 18b of the protrusion 18 forms a pair.

In the example illustrated in FIG. 7, the adjustment member 26 is formed of a pair of spacers 26a, 26b. The spacers 26a, 26b each have a triangular prism shape.

A first spacer 26a is disposed between the inner surface of the first restriction plate 43a and the first side surface 18a of the protrusion 18. The first spacer 26a is in contact with each of the inner surface of the first restriction plate 43a and the first side surface 18a of the protrusion 18. The first spacer 26a has a wedge shape, the width of which decreases from the front side to the rear side in the front-rear direction of the loom 10.

A second spacer 26b is disposed between the inner surface of the second restriction plate 43b and the second side surface 18b of the protrusion 18. The second spacer 26b is in contact with each of the inner surface of the second restriction plate 43b and the second side surface 18b of the protrusion 18. The second spacer 26b has a wedge shape, the width of which increases from the front side to the rear side in the front-rear direction of the loom 10.

In this way, the adjustment member 26 is disposed between the restriction portion 43 and the protrusion 18 so as to be in contact with each of the restriction portion 43 and the protrusion 18. With the adjustment member 26, the longitudinal direction of the base portion 40 of the bracket 24 is inclined relative to the direction in which the side surfaces 18a, 18b of the protrusion 18 forms a pair. Therefore, the longitudinal direction of the base portion 40 of the bracket 24 is inclined relative to the lateral direction of the loom 10.

According to this configuration, the angle θ of the bracket 24 relative to the lateral direction of the loom 10 can be adjusted by the adjustment member 26. Thus, the image capturing range of the camera 21 fixed to the camera fixing portion 41 of the bracket 24 can be adjusted. In addition, even if the bracket 24 is rotated relative to the first side frame 11a about the bolt 25, the restriction portion 43 in contact with the adjustment member 26 and the adjustment member 26 in contact with the protrusion 18 restrict the rotation of the bracket 24. That is, even if the bracket 24 is rotated relative to the first side frame 11a about the bolt 25, the restriction portion 43 in contact with the protrusion 18 via the adjustment member 26 restricts the rotation of the bracket 24. As a result, the image capturing range of the camera 21 may be kept constant.

The "restriction portion 43 in contact with the fixed member of the loom 10 restricting the rotation of the bracket 24" includes not only the restriction portion 43 directly in contact with the fixed portion to restrict the rotation of the bracket 24 as in the above embodiment, but also the restriction portion 43 in contact with the fixed member via the adjustment member 26 to restrict the rotation of the bracket 24 as in the above example.

It is noted that the first spacer 26a may have a wedge shape whose width increases from the front side to the rear side in the front-rear direction of the loom 10, and the second spacer 26b may have a wedge shape whose width decreases from the front side to the rear side in the front-rear direction of the loom 10.

The angle between the surfaces of the spacers 26a, 26b in contact with the restriction portion 43 and the surfaces of the spacers 26a, 26b in contact with the protrusion 18 may be changed as appropriate. The larger angle between the surfaces of the spacers 26a, 26b in contact with the restriction portion 43 and the surfaces of the spacers 26a, 26b in contact with the protrusion 18, the larger the inclination angle of the base portion 40 of the bracket 24 relative to the direction in which the side surfaces 18a, 18b of the protrusion 18 forms a pair.

The direction in which the side surfaces 18a, 18b of the protrusion 18 forms a pair may be inclined relative to the lateral direction of the loom 10. In this case, for example, the longitudinal direction of the base portion 40 of the bracket 24 may coincide with the lateral direction of the loom 10. In other words, the angle θ of the bracket 24 relative to the lateral direction of the loom 10 may be 0 degrees.

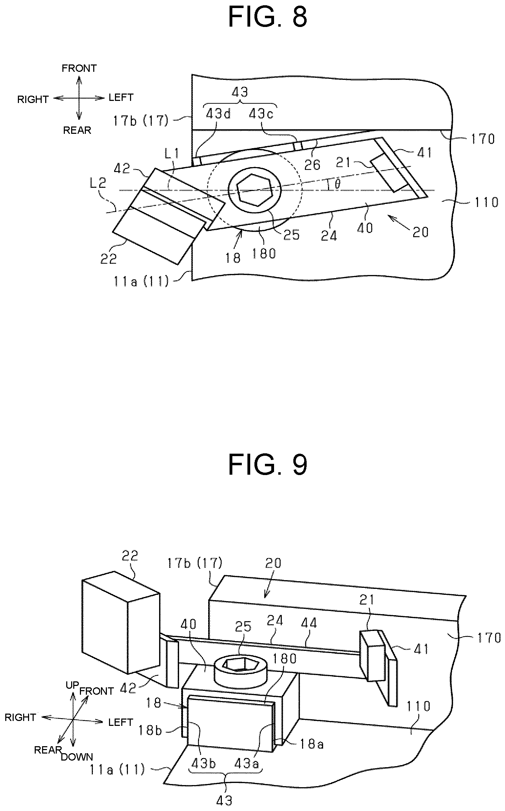

As illustrated in FIG. 8, the loom abnormality detection device 20 may include the adjustment member 26 for adjusting the angle θ of the bracket 24 relative to the lateral direction of the loom 10. In the example illustrated in FIG. 8, the rear surface 170 of the housing 17b extends along the lateral direction of the loom 10. Thus, the angle θ of the bracket 24 relative to the lateral direction of the loom 10 is adjusted by adjusting the inclination angle of the longitudinal direction of the base portion 40 of the bracket 24 relative to the rear surface 170 of the housing 17b. In the example illustrated in FIG. 8, the adjustment member 26 has a triangular prism shape.

The adjustment member 26 is disposed between distal end surfaces of the pair of restriction protrusions 43c, 43d and the rear surface 170 of the housing 17b of the operation unit 17. The adjustment member 26 is in contact with the distal end surfaces faces of the restriction protrusions 43c, 43d and the rear surface 170 of the housing 17b. The adjustment member 26 has a wedge shape whose width increases from the left side to the right side in the lateral direction of the loom 10.

In this way, the adjustment member 26 is disposed between the restriction portion 43 and the housing 17b of the operation unit 17 so as to be in contact with the restriction portion 43 and the housing 17b. The adjustment member 26 causes the longitudinal direction of the base portion 40 of the bracket 24 to be inclined relative to the rear surface 170 of the housing 17b. Therefore, the longitudinal direction of the base portion 40 of the bracket 24 is inclined relative to the lateral direction of the loom 10.

According to this configuration, the angle θ of the bracket 24 relative to the lateral direction of the loom 10 can be adjusted by the adjustment member 26. Thus, the image capturing range of the camera 21 fixed to the camera fixing portion 41 of the bracket 24 can be adjusted. That is, even if the bracket 24 is rotated relative to the first side frame 11a about the bolt 25, the restriction portion 43 in contact with the adjustment member 26 and the adjustment member 26 in contact with the housing 17b restrict the rotation of the bracket 24. That is, even if the bracket 24 is rotated relative to the first side frame 11a about the bolt 25, the restriction portion 43 in contact with the housing 17b via the adjustment member 26 restricts the rotation of the bracket 24. As a result, the image capturing range of the camera 21 may be kept constant.

The adjustment member 26 may have a wedge shape whose width decreases from the left side to the right side in the lateral direction of the loom 10.

The angle between the surface of the adjustment member 26 in contact with the restriction portion 43 and the surface of the adjustment member 26 in contact with the rear surface 170 of the housing 17b may be changed as appropriate. The larger the angle between the surface of the adjustment member 26 in contact with the restriction portion 43 and the surface of the adjustment member 26 in contact with the rear surface 170 of housing 17b, the larger the inclination angle of the base portion 40 of the bracket 24 in the longitudinal direction relative to the rear surface 170 of the housing 17b.

The rear surface 170 of the housing 17b may be inclined relative to the lateral direction of the loom 10. In this case, for example, the longitudinal direction of the base portion 40 of the bracket 24 may coincide with the lateral direction of the loom 10. In other words, the angle θ of the bracket 24 relative to the lateral direction of the loom 10 may be 0 degrees.

The adjustment member 26 does not have to have a triangular prism shape. The adjustment member 26 may have, for example, a rectangular parallelepiped shape.

In the example illustrated in FIG. 7, the first spacer 26a of the adjustment member 26 may be formed integrally with the first restriction plate 43a of the restriction portion 43, and the second spacer 26b of the adjustment member 26 may be formed integrally with the second restriction plate 43b of the restriction portion 43.

In the example illustrated in FIG. 8, the adjustment member 26 may be formed integrally with the restriction portion 43 of the bracket 24.

As illustrated in FIG. 9, the bracket 24 may have an arm 44 that extends upward from a front end of the base portion 40 in the front-rear direction of the loom 10 and extends in the lateral direction of the loom 10. In the example illustrated in FIG. 9, the camera fixing portion 41 extends rearward in the front-rear direction of the loom 10 from a first end of the arm 44. The light source fixing portion 42 extends rearward in the front-rear direction of the loom 10 from a second end of the arm 44. In this case, the length of the base portion 40 in the lateral direction of the loom 10 may be shortened. As a result, even if there is a member around the protrusion 18, interference between the base portion 40 and such a member may be prevented.

In the example illustrated in FIG. 9, the restriction portion 43 is formed of the pair of restriction plates 43a, 43b extending from the lower surface of the base portion 40, but the configuration is not limited to this. A front surface of the arm 44 in contact with the rear surface 170 of the housing 17b of the operation unit 17 may restrict the rotation of the bracket 24. In this case, since the arm 44 functions as the restriction portion 43, the pair of restriction plates 43a, 43b may be omitted.

Although not illustrated, the arm 44 may extend upward from the rear end of the base portion 40 in the front-rear direction of the loom 10 and extend in the lateral direction of the loom 10. The camera fixing portion 41 extends frontward, for example, from the first end of the arm 44 in the front-rear direction of the loom 10. The light source fixing portion 42 extends frontward, for example, from the second end of the arm 44 in the front-rear direction of the loom 10. Even in this case, the length of the base portion 40 in the lateral direction of the loom 10 may be shortened. As a result, even if there is a member around the protrusion 18, interference between the base portion 40 and such a member may be prevented.

Although not illustrated, the arm 44 may include a first arm portion extending upward from the base portion 40, and a second arm portion extending in the lateral direction of the loom 10 from an upper end of the first arm. The camera fixing portion 41 extends downward from the first end of the second arm portion. The light source fixing portion 42 extends downward from the second end of the second arm portion. Even in this case, the length of the base portion 40 in the lateral direction of the loom 10 may be shortened. As a result, even if there is a member around the protrusion 18, interference between the base portion 40 and such a member may be prevented.

In the above embodiment, the camera fixing portion 41 and the camera 21 are disposed on the left side of the bolt 25 in the lateral direction of the loom 10, and the light source fixing portion 42 and the light source 22 are disposed on the right side of the bolt 25 in the lateral direction of the loom 10, but the configuration is not limited to this.

For example, the camera fixing portion 41 and the camera 21 may be disposed on the right side of the bolt 25 in the lateral direction of the loom 10, and the light source fixing portion 42 and the light source 22 may be disposed on the left side of the bolt 25 in the lateral direction of the loom 10.

For example, the camera fixing portion 41, the light source fixing portion 42, the camera 21, and the light source 22 may be disposed on the right or left side of the bolt 25 in the lateral direction of the loom 10.

The loom abnormality detection device 20 does not have to include the light source 22.

The camera 21 and the light source 22 may be unitized and fixed to the bracket 24. In this case, the camera fixing portion 41 also serves as the light source fixing portion 42.

The light source 22 may be fixed to the first side frame 11a by being fixed to a bracket other than the bracket 24 to which the camera 21 is fixed.

Although the loom abnormality detection device 20 of the above embodiment detects an abnormality in the shed of the warp yarns T, the loom abnormality detection device 20 may be configured to detect an abnormality other than the shed of the warp yarns T.

For example, the loom abnormality detection device 20 may detect an abnormality in the loom 10, such as the main nozzle 14, a tandem nozzle, an EDP (measuring drum), an ABS (weft tension adjustment device), and a cutter. Even in this case, similarly to the above embodiment, the bracket 24 is fixed to the first side frame 11a by screwing the bolt 25 inserted into the bolt insertion hole 40a of the base portion 40 into the screw hole 19 for the eye bolt B provided in the first side frame 11a. Therefore, the camera 21 and the light source 22 fixed to the bracket 24 are also fixed to the first side frame 11a.

For example, the loom abnormality detection device 20 may be configured to detect an abnormality in the shed of the warp yarns T from the exit T2 side, or an abnormality in a weft arrival sensor that detects whether the weft yarn Y has reached the exit T2 of the shed of the warp yarns T. In this case, the bracket 24 is fixed to the second side frame 11b by screwing the bolt 25 inserted through the bolt insertion hole 40a of the base portion 40 into the screw hole 19 for the eye bolt B (not illustrated) provided in the second side frame 11b. Therefore, the camera 21 and the light source 22 fixed to the bracket 24 are also fixed to the second side frame 11b.

The loom abnormality detection device 20 may be used in a loom other than an air jet loom, such as a water jet loom.

### [Additional Notes]

The technical ideas that can be understood from the above-described embodiment and modifications will be described below.

### <Additional note 1>

A loom abnormality detection device comprising: a camera; a detection unit configured to detect an abnormality in a loom or in weaving, based on an image captured by the camera; a bracket having a camera fixing portion to which the camera is fixed; a bolt inserted through a bolt insertion hole of the bracket and screwed into a screw hole for an eye bolt provided in a side frame of the loom, characterized in that the bracket includes a restriction portion, the restriction portion being in contact with a fixed member to restrict rotation of the bracket, the fixed member being a part of the loom, a position of which does not change.

### <Additional note 2>

The loom abnormality detection device according to Additional note 1, further comprising a light source configured to illuminate an image capturing range of the camera, characterized in that the bracket includes a light source fixing portion to which the light source is fixed.

### <Additional note 3>

The loom abnormality detection device according to Additional note 1 or 2, characterized in that the side frame has a protrusion that protrudes from an upper surface and corresponds to the fixed member, the protrusion has a rectangular shape in a plan view, the screw hole is opened at a distal end surface of the protrusion, and the restriction portion is in contact with a side surface of the protrusion to restrict the rotation of the bracket.

### <Additional note 4>

The loom abnormality detection device according to Additional note 3, characterized in that the restriction portion is formed of a pair of restriction plates, and the restriction plates sandwiches the protrusion.

### <Additional note 5>

The loom abnormality detection device according to Additional note 1 or 2, characterized in that the loom includes an operation unit corresponding to the fixed member provided in the side frame, and the restriction portion is in contact with a rear surface of a housing of the operation unit to restrict the rotation of the bracket.

### <Additional note 6>

The loom abnormality detection device according to any one of Additional note 1 through 5, further comprising an adjustment member disposed between the restriction portion and the fixed member so as to be in contact with the restriction portion and the fixed member, and configured to adjust an angle of the bracket relative to a lateral direction of the loom.

## Claims

1. A loom abnormality detection device (20) comprising:
a camera (21);
a detection unit (23) configured to detect an abnormality in a loom (10) or in weaving, based on an image captured by the camera (21);
a bracket (24) having a camera fixing portion (41) to which the camera (21) is fixed; and
a bolt (25) inserted through a bolt insertion hole (40a) of the bracket (24) and screwed into a screw hole (19) for an eye bolt (B) provided in a side frame (11a, 11b) of the loom (10), **characterized in that**
the bracket (24) includes a restriction portion (43), the restriction portion (43) being in contact with a fixed member to restrict rotation of the bracket (24), the fixed member being a part of the loom (10), a position of which does not change.

2. The loom abnormality detection device (20) according to claim 1, further comprising
a light source (22) configured to illuminate an image capturing range of the camera (21), **characterized in that**
the bracket (24) includes a light source fixing portion (42) to which the light source (22) is fixed.

3. The loom abnormality detection device (20) according to claim 1 or 2, **characterized in that**
the side frame (11a, 11b) has a protrusion (18) that protrudes from an upper surface of the side frame (11a, 11b) and corresponds to the fixed member,
the protrusion (18) has a rectangular shape in a plan view,
the screw hole (19) is opened at a distal end surface (180) of the protrusion (18), and
the restriction portion (43) is in contact with a side surface (18a, 18b) of the protrusion (18) to restrict the rotation of the bracket (24).

4. The loom abnormality detection device (20) according to claim 3, **characterized in that**
the restriction portion (43) is formed of a pair of restriction plates (43a, 43b), and
the pair of restriction plates (43a, 43b) sandwich the protrusion (18).

5. The loom abnormality detection device (20) according to claim 1 or 2, **characterized in that**
the loom (10) includes an operation unit (17) corresponding to the fixed member provided in the side frame (11a, 11b), and
the restriction portion (43) is in contact with a rear surface of a housing (17b) of the operation unit (17) to restrict the rotation of the bracket (24).

6. The loom abnormality detection device (20) according to any one of claims 1 to 5, further comprising
an adjustment member (26) disposed between the restriction portion (43) and the fixed member so as to be in contact with the restriction portion (43) and the fixed member, and configured to adjust an angle of the bracket (24) relative to a lateral direction of the loom (10).
